# EUROPEAN PATENT SPECIFICATION

(11) **EP 4 406 674 B1**
(45) Date of publication and mention of the grant of the patent: **11.02.2026**
(21) Application number: 23829665.1
(22) Date of filing: 26.04.2023
(51) Int. Cl.: B21D 35/00

(54) **HOUSING AND MANUFACTURING METHOD THEREFOR, AND TERMINAL DEVICE**
GEHÄUSE UND HERSTELLUNGSVERFAHREN DAFÜR SOWIE ENDGERÄTEVORRICHTUNG
BOÎTIER ET PROCÉDÉ DE FABRICATION ASSOCIÉ ET DISPOSITIF TERMINAL

(30) Priority: 30.06.2022 CN 202210764603
(43) Date of publication of application: 31.07.2024
(73) Proprietor: Honor Device Co., Ltd., Shenzhen, Guangdong 518040 (CN)
(72) Inventor: ZHANG, Shaohui, Shenzhen, Guangdong 518040 (CN); HUO, Guoliang, Shenzhen, Guangdong 518040 (CN); LI, Kuang, Shenzhen, Guangdong 518040 (CN)
(74) Representative: Isarpatent
(86) International application number: PCT/CN2023/090867
(87) International publication number: WO 2024/001478

(56) References cited:
- CN-A- 101 332 483
- CN-A- 103 331 377
- CN-A- 109 647 937
- CN-A- 111 200 713
- CN-A- 112 139 308
- CN-A- 113 102 623
- DE-B3- 102007 063 523

## Description

### TECHNICAL FIELD

This application relates to the field of terminal device technologies, and in particular, to a housing of a terminal device, and a manufacturing method therefor.

### BACKGROUND

With improvement of living standards of people, a terminal device such as a notebook computer, a mobile phone, or a tablet computer has become an important tool for daily working and entertainment of people. A housing of the terminal device is an important component thereof, and how to design and manufacture the housing becomes an important issue in the industry.

In related technologies, a housing of a terminal device is formed by bending a sheet material in a pressure machining manner, and at a corner of the housing, a rounded corner is usually formed by bending. When the rounded corner is too large, appearance and refinement of the housing may be affected. Therefore, to reduce a size of the rounded corner, after the housing is formed, a material around the rounded corner is milled through numerical control machining. However, time consumed for adding a procedure of the numerical control machining is long, lowering production efficiency of the housing.

CN 113 102 623 A relates to a housing processing method, a housing and an electronic device, wherein the method comprises the following steps: bending a substrate, and at least forming a first plate part and a second plate part which are perpendicular to each other; placing the substrate in a mold, wherein the mold is provided with a preset cavity; and extruding the first plate part in a first direction, so that a first part of the first plate part extends out of the preset cavity in a second direction to form a protruding part; wherein the first direction is different from the second direction. The bent substrate is placed in the mold, the first plate part is extruded through the preset cavity of the mold to obtain the protruding part, the special structure of the housing can be machined, and the precision and strength of the special structure are guaranteed; the protruding part can be formed by extending from the plate surface of the first plate part and can also be formed by extending from the end part of the first plate part, so that different requirements of users are met.
CN 103 331 377 A refers to the field of cold punching mold processing and particularly relates to an external small R corner forming mold and a process for a notebook computer case.
CN 109 647 937 A describes a bending process for a side wall of a metal casing.

### SUMMARY

This application provide, as defined in the appended set of claims, a housing of a terminal device, and a manufacturing method therefor, to resolve a problem of low production efficiency of the housing of the terminal device in related technologies.

To achieve the foregoing objective, the following technical solutions are applied in embodiments of this application:

According to a first aspect, an embodiment of this application provides a housing of a terminal device according to claim 1.

By using the foregoing technical solution, the radius of the first rounded corner can be reduced by replacing time-consuming numerical control milling machining with pressure machining. In this way, manufacturing time of the housing can be shortened, to improve manufacturing efficiency of the housing, and a texture trace of a milling cutter is also prevented from being left on an appearance surface of the housing.

By using the foregoing technical solution, impact on structural integrity and structural strength of the side wall is small.

In some embodiments, the first groove is arranged at a junction between the vertical wall and the inner bent wall.

By using the foregoing technical solution, the first groove can be closer to the first rounded corner, so that the first groove is more easily formed.

In some embodiments, a wall thickness of the vertical wall is d1, and a groove depth of the first groove is h1, where h1=(0.125 to 0.1875) d1.

By using the foregoing technical solution, strength at the first corner can be ensured, and reduction of the first rounded corner can also be prevented from being too small.

In some embodiments, the first structural portion includes a first extrusion surface, and the first extrusion surface is located on an outer side of the inner bent wall and is connected to the first rounded corner.

By using the foregoing technical solution, when the first extrusion surface is formed, part of a material on the outer side of the inner bent wall is extruded to the first rounded corner, so that the radius of the first rounded corner is further reduced.

In some embodiments, a second corner formed by the side wall and the bottom wall is provided with a second structural portion formed by pressure machining, so that plastic deformation occurs at a second rounded corner located on an outer side of the second corner, to reduce a radius of the second rounded corner.

By using the foregoing technical solution, manufacturing time of the housing can be shortened, to improve manufacturing efficiency of the housing, and the texture trace of the milling cutter is also prevented from being left on the appearance surface of the housing.

In some embodiments, the second structural portion includes a second groove, and the second groove is arranged on an inner side of the second corner and extends in the circumferential direction of the housing.

By using the foregoing technical solution, impact on structural integrity and structural strength at an edge of the housing is small.

In some embodiments, the second groove is arranged at a junction between the bottom wall and the side wall.

By using the foregoing technical solution, the second groove can be closer to the second rounded corner, so that the second groove is more easily formed.

In some embodiments, a wall thickness of the bottom wall is d2, and a groove depth of the second groove is h2, where h2=(0.125 to 0.1875) d2.

By using the foregoing technical solution, strength at the second corner can be ensured, and reduction of the second rounded corner can also be prevented from being too small.

In some embodiments, the second structural portion includes a second extrusion surface, and the second extrusion surface is located at an end portion of the side wall away from the bottom wall.

By using the foregoing technical solution, when the second extrusion surface is formed, part of a material on the side wall is extruded to the second rounded corner, so that the radius of the second rounded corner is further reduced.

In some embodiments, wall thicknesses of the bottom wall, the vertical wall, and the inner bent wall are equal.

By using the foregoing technical solution, large deformation at an edge of the housing under an action of external force is avoided, thereby ensuring reliability of a structure of the housing.

In some embodiments, the vertical wall is provided with an opening, and the inner bent wall is arranged at the opening in the circumferential direction of the housing.

By using the foregoing technical solution, strength of the housing at the opening is enhanced, and rigidity and bending resistance of the housing are greatly improved.

According to a second aspect, an embodiment of this application provides a terminal device, including the housing according to the first aspect.

Technical effects obtained by the terminal device according to the second aspect and the housing according to the first aspect are the same. Details are not described herein again.

According to a third aspect, an embodiment of this application provides a manufacturing method according to claim 8.

Technical effects obtained by the manufacturing method for a housing according to the third aspect and the housing according to the first aspect are the same. Details are not described herein again.

By using the foregoing technical solution, impact on structural integrity and structural strength of the side wall is small.

In some embodiments, the method further includes: extruding, during the bending a part of the side wall away from the bottom wall inward, the inner side of the first corner to form the first groove.

By using the foregoing technical solution, a process can be reduced, so that manufacturing efficiency of the housing is further improved.

In some embodiments, the performing pressure machining on a first corner further includes: clamping the vertical wall after the first groove is formed, to prevent plastic deformation of the vertical wall in a thickness direction; stamping or extruding the inner bent wall in a direction close to the bottom wall, to reduce the radius of the first rounded corner; and forming a first extrusion surface on an outer side of the inner bent wall.

By using the foregoing technical solution, the inner bent wall is subjected to extrusion force and undergoes plastic deformation in the direction close to the bottom wall, and part of a material on the outer side of the inner bent wall is extruded to the first rounded corner, so that the radius of the first rounded corner is further reduced. By clamping the vertical wall, a wrinkle on the vertical wall caused by plastic deformation of the vertical wall under pressure can be avoided.

In some embodiments, after the bending an edge area of a sheet material to form a side wall of the housing, the method further includes: performing pressure machining on a second corner formed by the side wall and the bottom wall, so that plastic deformation occurs at a second rounded corner located on an outer side of the second corner, to reduce a radius of the second rounded corner.

By using the foregoing technical solution, manufacturing time of the housing can be shortened, to improve manufacturing efficiency of the housing, and a texture trace of a milling cutter is also prevented from being left on an appearance surface of the housing.

In some embodiments, the performing pressure machining on a second corner includes: extruding an inner side of the second corner, to form a second groove extending in the circumferential direction of the housing.

By using the foregoing technical solution, impact on structural integrity and structural strength at an edge of the housing is small.

In some embodiments, the performing pressure machining on a second corner further includes: clamping the side wall after the second groove is formed, to prevent plastic deformation of the side wall in the thickness direction; stamping or extruding an end portion of the side wall away from the bottom wall in the direction close to the bottom wall, to reduce the radius of the second rounded corner; and forming a second extrusion surface at the end portion of the side wall away from the bottom wall.

By using the foregoing technical solution, part of a material on the side wall is extruded to the second rounded corner, so that the radius of the second rounded corner is further reduced. By clamping the side wall, a wrinkle on the side wall caused by plastic deformation of the side wall under pressure can be avoided.

In some embodiments, the bending an edge area of a sheet material to form a side wall of the housing, and the extruding an inner side of the second corner, to form a second groove extending in the circumferential direction of the housing include: bending the edge area of the sheet material inward at a preset angle to form the side wall, and extruding the inner side of the second corner to form a transition groove, where the preset angle is less than 90°; and continuously bending the side wall inward to a preset position, and extruding a position of the transition groove, to form the second groove.

By using the foregoing technical solution, this design can avoid forming a wrinkle on an outer side surface of the second corner due to overlarge plastic deformation at the second corner, thereby ensuring flatness of appearance at the second corner.

In some embodiments, the preset angle ranges from 45° to 70°.

By using the foregoing technical solution, plastic deformation at the second corner can be small when the side wall is bent each time, thereby ensuring flatness of the outer side surface of the second corner.

### BRIEF DESCRIPTION OF DRAWINGS

FIG. 1 is a schematic diagram of a structure of a notebook computer according to some embodiments of this application;
FIG. 2 is a schematic diagram of a structure of a front surface of a host body in FIG. 1;
FIG. 3 is a schematic diagram of a structure of a back surface of a host body in FIG. 1;
FIG. 4 is an exploded view of a host body in FIG. 1 after internal electronic components are disassembled;
FIG. 5 is a sectional view of a host body of a notebook computer at an edge in related technologies;
FIG. 6 is a sectional view of a host body of another notebook computer at an edge in the related technologies;
FIG. 7 is a schematic diagram of removing, through numerical control machining, a material of a housing of the notebook computer in FIG. 6 after being formed;
FIG. 8 is a three-dimensional sectional view of the host body in FIG. 3 along A-A;
FIG. 9 is sectional view of an edge of the host body in FIG. 3 according to other embodiments;
FIG. 10A is a schematic diagram of a manufacturing process of a housing shown in FIG. 8;
FIG. 10B is a flowchart of a manufacturing process of a housing shown in FIG. 8;
FIG. 11A and FIG. 11B are a schematic diagram of a manufacturing process of a housing shown in FIG. 9;
FIG. 12 is a schematic diagram of a structure of a tablet computer according to some embodiments of this application;
FIG. 13 is a partial enlarged view of part A in FIG. 12; and
FIG. 14 is a three-dimensional sectional view in FIG. 13 along B-B.

### DESCRIPTION OF EMBODIMENTS

In embodiments of this application, terms "first" and "second" are used merely for description of an objective, and cannot be understood as indicating or implying relative importance or implicitly indicating a quantity of indicated technical features. Therefore, features limited by "first" and "second" may explicitly or implicitly include one or more of the features.

A terminal device in embodiments of this application may be a mobile phone, a tablet computer, a notebook computer, a wearable device (such as a smart watch), or the like.

A specific structure and a manufacturing method of a housing of the terminal device are described below by using the notebook computer and the tablet computer as examples, and another terminal device may be set by specifically referring to the housing and the manufacturing method therefor in embodiments of the notebook computer and the tablet computer. Details are not described herein again.

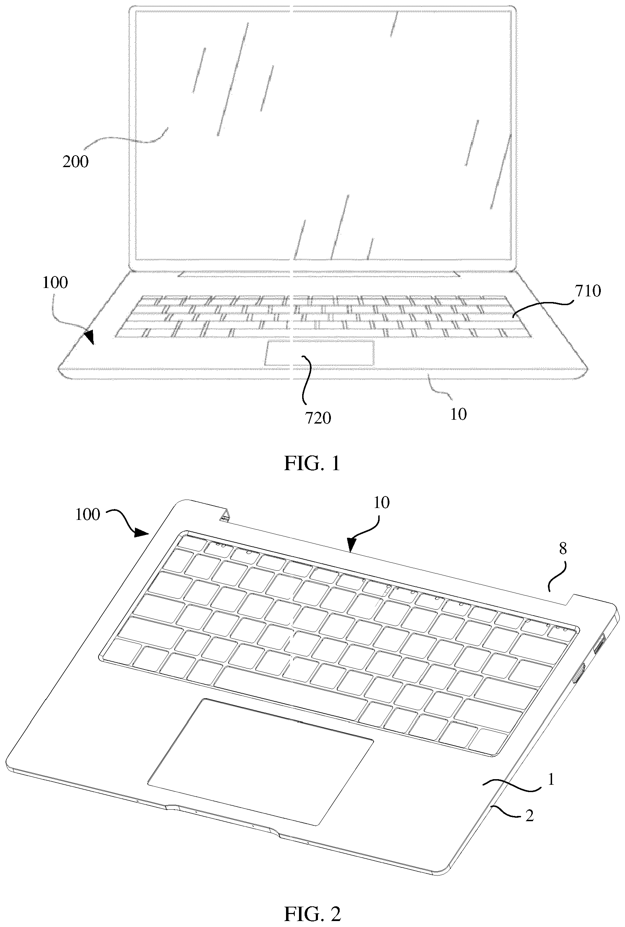

As shown in FIG. 1, FIG. 1 is a schematic diagram of a structure of a notebook computer according to some embodiments of this application. In the embodiments, a terminal device is a notebook computer, and the notebook computer includes a display screen 200 and a host body 100. The display screen 200 is rotatably connected to the host body 100, so that the display screen 200 and the host body 100 may be switched between a folded state and an open state (a state shown in FIG. 1).

When in the open state, there is a specific angle between a display surface of the display screen 200 and the host body 100, such as 90° or 120°. When in the folded state, the display surface of the display screen 200 is stacked with the host body 100, in other words, the display surface of the display screen 200 is parallel to or approximately parallel to the host body 100 (for example, a deviation is within 5°).

The display screen 200 and the host body 100 may be hinged through a hinge shaft, or may be hinged through a hinge structure. This is not specifically limited herein.

In some embodiments, the display screen 200 is detachably connected to the host body 100. In this design, during use, the display screen 200 may be placed on the host body 100, and after use, the display screen 200 may be separated from the host body 100, so that the notebook computer is more convenient to carry and use.

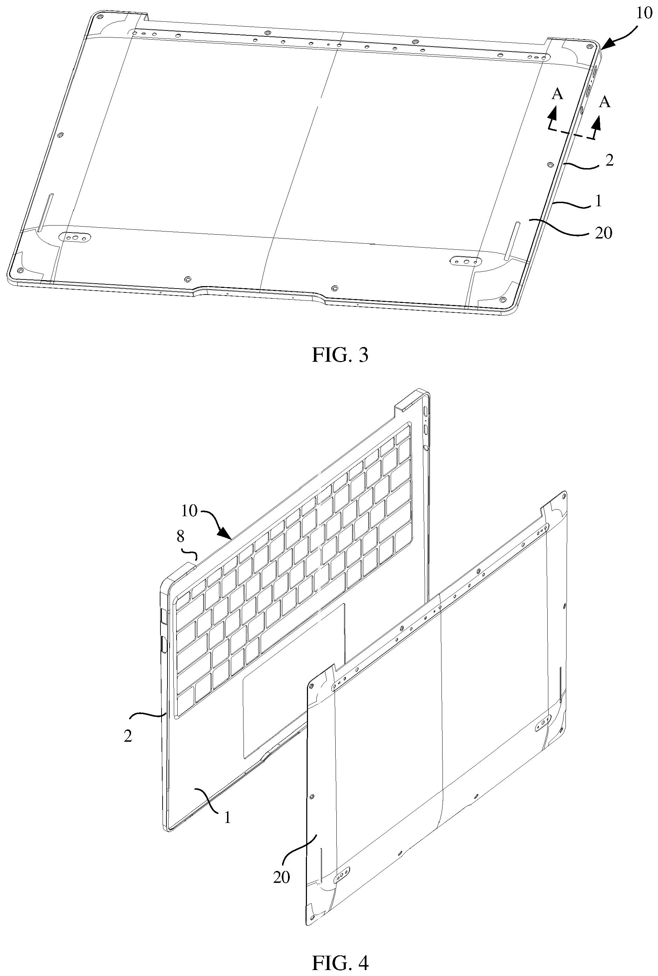

As shown in FIG. 2, FIG. 3, and FIG. 4, FIG. 2 is a schematic diagram of a structure of a front surface of the host body 100 in FIG. 1, FIG. 3 is a schematic diagram of a structure of a back surface of the host body 100 in FIG. 1, and FIG. 4 is an exploded view of the host body 100 in FIG. 1 after internal electronic components are disassembled.

The host body 100 includes a housing 10 (also referred to as a "cover C component") and a back cover 20. A keyboard 710 and a touch panel 720 are mounted on a side of the housing 10 (as shown in FIG. 1).

The back cover 20 is detachably buckled on a back side of the housing 10, so that the back cover 20 and the housing 10 enclose an accommodating space, and the accommodating space is for arranging the internal electronic components of the notebook computer.

The back cover 20 may be detachably connected to the housing 10 through fasteners such as screws (as shown in FIG. 3), or may be detachably connected to the housing 10 through snapping. This is not specifically limited herein.

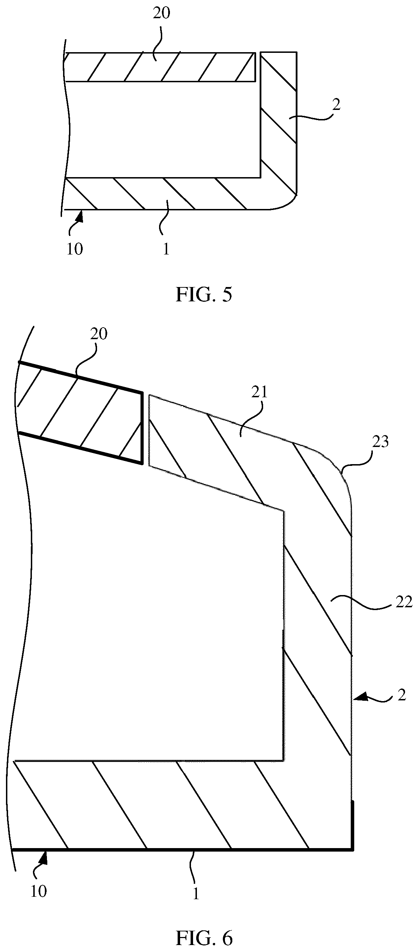

As shown in FIG. 5, FIG. 5 is a sectional view of a host body 100 of a notebook computer at an edge in related technologies. A housing 10 includes a bottom wall 1 and a side wall 2 bent and connected to an edge of the bottom wall 1, an angle between the side wall 2 and the bottom wall 1 is approximately perpendicular, and a back cover 20 is detachably buckled on a back side of the housing 10, and is connected to the side wall 2.

However, according to a structure of the housing 10, a seam between the back cover 20 and the side wall 2 is too close to an appearance surface of the housing 10 (an outer side surface of the side wall 2), and when the notebook computer is flatly placed on an edge of a table, a user may easily observe the seam from a lower side of the notebook computer, affecting appearance and refinement of the notebook computer.

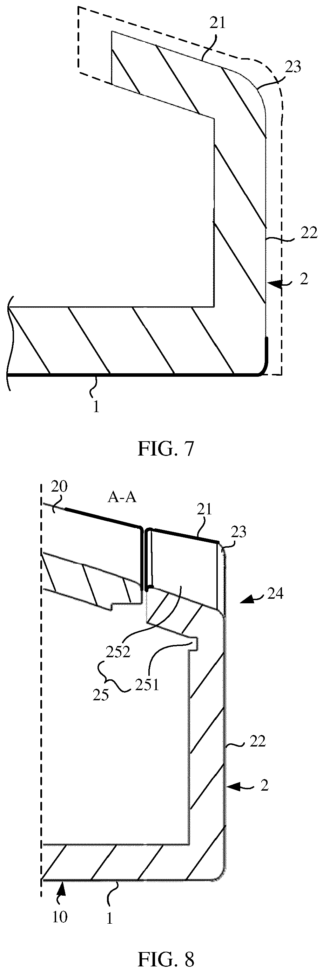

Therefore, in the related technologies, a housing 10 of a notebook computer is further provided. As shown in FIG. 6 and FIG. 7, FIG. 6 is a sectional view of a host body 100 of another notebook computer at an edge in the related technologies, and FIG. 7 is a schematic diagram of removing, through numerical control machining, a material of a housing 10 of the notebook computer in FIG. 6 after being formed.

The housing 10 includes a bottom wall 1 and a side wall 2 bent and connected to an edge of the bottom wall 1, where a part of the side wall 2 away from the bottom wall 1 is bent inward to form an inner bent wall 21. A back cover 20 is detachably buckled on a back side of the housing 10, and is connected to the inner bent wall 21. By arranging the inner bent wall 21, a distance between a seam and an appearance surface of the housing 10 is increased, so that a user does not easily observe the seam, thereby enabling appearance of the notebook computer to be simpler, and improving refinement of the notebook.

As shown in FIG. 6, a first rounded corner 23 exists at a bending position of the inner bent wall 21, and if a radius of the first rounded corner 23 is too large, appearance and refinement of the housing 10 are affected. The first rounded corner 23 is located on the side wall 2 of the housing 10, it is not easy to make the first rounded corner 23 smaller in a bending process of the side wall 2, and in a general bending forming process (for example, forming through stamping and bending), the radius of the first rounded corner 23 is once or more a wall thickness of the side wall 2. Therefore, to reduce the radius of the first rounded corner 23, in the related technologies, after the housing 10 is formed by bending, a material around the first rounded corner 23 is milled through numerical control milling machining (as shown in FIG. 7, a dotted line part in the figure is a contour of the side wall 2 before the material is removed, and a solid line part is a contour of the side wall 2 after the material is removed. In other words, the thickness of the side wall 2 (including the inner bent wall 21) is milled thin, and in this case, the wall thickness of the side wall 2 is less than a wall thickness of the bottom wall 1), to reduce the radius of the first rounded corner 23.

However, because numerical control milling machining is time-consuming, time consumed for manufacturing the housing 10 is increased, reducing manufacturing efficiency of the housing 10. In addition, by using numerical control milling machining, a texture trace of a milling cutter is left on an appearance surface around the first rounded corner 23, affecting appearance of the housing 10.

To resolve a problem of low manufacturing efficiency of the housing 10 in the related technologies, as shown in FIG. 8, FIG. 8 is a three-dimensional sectional view of the host body 100 in FIG. 3 along A-A. The housing 10 includes a bottom wall 1 and a side wall 2 bent and connected to an edge of the bottom wall 1, where a part of the side wall 2 away from the bottom wall 1 is bent inward to form an inner bent wall 21, and a part of the side wall 2 located between the inner bent wall 21 and the bottom wall 1 is a vertical wall 22. A first corner 24 formed by the inner bent wall 21 and the vertical wall 22 is provided with a first structural portion 25 formed by pressure machining, so that plastic deformation occurs at a first rounded corner 23 located on an outer side of the first corner 24, to reduce a radius of the first rounded corner 23.

"The first corner 24" specifically refers to an area with a specific angle formed by the inner bent wall 21 and the vertical wall 22, and the area includes the inner bent wall 21, a transition area in which the inner bent wall 21 is connected to the vertical wall 22, and a partial area of the vertical wall 22 close to the inner bent wall 21.

By arranging the first structural portion 25 formed by pressure machining, plastic deformation can occur at the first rounded corner 23, to reduce the radius of the first rounded corner 23. In this way, the radius of the first rounded corner 23 can be reduced by replacing time-consuming numerical control milling machining with pressure machining. In this way, manufacturing time of the housing 10 can be shortened, to improve manufacturing efficiency of the housing 10, and a texture trace of a milling cutter is also prevented from being left on an appearance surface of the housing 10.

A material of the housing 10 may be made of metal or alloy prone to plastic deformation, such as aluminum, aluminum alloy, or steel (such as stainless steel). The angle formed between the inner bent wall 21 and the vertical wall 22 may be an obtuse angle (as shown in FIG. 8) or a right angle. This may be specifically determined according to an actual condition.

In some embodiments, as shown in FIG. 8, the first structural portion 25 includes a first groove 251, and the first groove 251 is arranged on an inner side of the first corner 24 and extends in a circumferential direction of the housing 10. When the first groove 251 is formed, a material at the first groove 251 is extruded from an inner side of the side wall 2 to the first rounded corner 23, to reduce the radius of the first rounded corner 23. Arrangement of the first groove 251 merely enables local plastic deformation to occur at the first corner 24, so that impact on structural integrity and structural strength of the side wall 2 is small.

In some embodiments, as shown in FIG. 8, the first groove 251 is arranged at a junction between the vertical wall 22 and the inner bent wall 21. In this design, the first groove 251 can be closer to the first rounded corner 23, and when the first groove 251 is formed, the material at the first groove 251 is more easily extruded to the first rounded corner 23, so that the first groove 251 is more easily formed.

Certainly, in addition to being arranged at the junction between the inner bent wall 21 and the vertical wall 22, the first groove 251 may also be arranged on an inner side surface of the vertical wall 22 or the inner bent wall 21. This is not specifically limited herein.

A groove depth of the first groove 251 is h1, representing an important parameter of the housing 10. h1 should not be too large or too small. If h1 is too large, strength at the first corner 24 is reduced, and the first corner 24 is prone to breakage under an action of external force; and if h1 is too small, when the first groove 251 is formed, the material at the first groove 251 extruded to the first rounded corner 23 is few, causing reduction of the first rounded corner 23 not to be large. It is found through researches that, when h1=(0.125 to 0.1875) d1, the strength at the first corner 24 can be ensured, and the reduction of the first rounded corner 23 can also be prevented from being too small. d1 is a wall thickness of the vertical wall 22.

For example, when the wall thickness d1 of the vertical wall 22 is equal to 0.8 mm, the groove depth h1 of the first groove 251 should be set to be 0.1 to 0.15 mm, so that the strength at the first corner 24 can be ensured, and the reduction of the first rounded corner 23 can also be prevented from being too small.

In some embodiments, as shown in FIG. 8, the first structural portion 25 further includes a first extrusion surface 252, and the first extrusion surface 252 is located on an outer side of the inner bent wall 21 and is connected to the first rounded corner 23. When the first extrusion surface 252 is formed, the inner bent wall 21 is subjected to extrusion force and undergoes plastic deformation in a direction close to the bottom wall 1, and part of a material on the outer side of the inner bent wall 21 is extruded to the first rounded corner 23, so that the radius of the first rounded corner 23 is further reduced.

For example, a wall thickness of the side wall 2 is 0.8 mm (in other words, the thickness of the vertical wall 22 and a thickness of the inner bent wall 21 are both 0.8 mm). By arranging the first groove 251, the radius of the first rounded corner 23 can be reduced to 0.8 mm; and by arranging the first extrusion surface 252, the radius of the first rounded corner 23 can be further reduced to 0.3 mm on a basis of 0.8 mm.

The first extrusion surface 252 may be formed by stamping (for example, pier extrusion), but is not limited thereto, or the first extrusion surface 252 may be formed by extrusion. This is not specifically limited.

It should be noted that, pier extrusion belongs to a stamping method, and a pier extrusion forming mold is a male mold (also referred to as a convex mold) and a female mold (also referred to as a concave mold). Extrusion is a processing method in which a blank is placed in an extrusion mold cavity, and under the room temperature, pressure is applied to the blank through a convex mold fixed on a press, so that the blank undergoes plastic deformation to obtain a part.

The foregoing first structural portion 25 may include both the first groove 251 and the first extrusion surface 252, and may also include only one of the first groove 251 and the first extrusion surface 252, so that the radius of the first rounded corner 23 can be reduced.

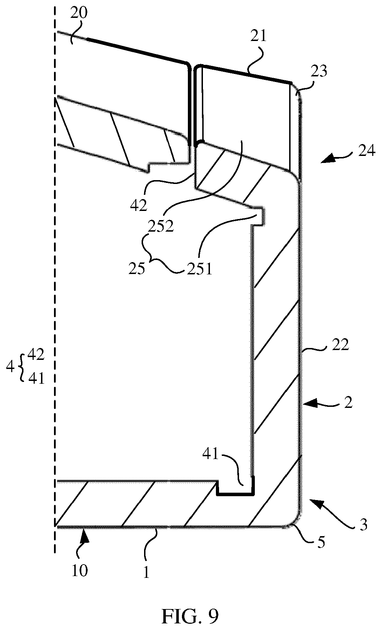

In some embodiments, as shown in FIG. 9, FIG. 9 is a sectional view of an edge of the host body 100 in FIG. 3 according to other embodiments. On a basis of the embodiments shown in FIG. 8, in the embodiments, a second corner 3 formed by the side wall 2 and the bottom wall 1 is provided with a second structural portion 4 formed by pressure machining, so that plastic deformation occurs at a second rounded corner 5 located on an outer side of the second corner 3, to reduce a radius of the second rounded corner 5.

"The second corner 3" specifically refers to an area with a specific angle formed by the side wall 2 and the bottom wall 1, and the area includes a side wall 2, a transition area in which the side wall 2 is connected to the bottom wall 1, and a partial area of the bottom wall 1 close to the side wall 2.

By arranging the second structural portion 4 formed by pressure machining, plastic deformation occurs at the second rounded corner 5, to reduce the radius of the second rounded corner 5, so that appearance of the housing 10 is more delicate. In this way, the radius of the second rounded corner 5 is reduced without setting time-consuming numerical control milling machining. In this way, manufacturing time of the housing 10 can be shortened, to improve manufacturing efficiency of the housing 10, and the texture trace of the milling cutter is also prevented from being left on the appearance surface of the housing 10.

In some embodiments, as shown in FIG. 9, the second structural portion 4 includes a second groove 41, and the second groove 41 is arranged on an inner side of the second corner 3 and extends in the circumferential direction of the housing 10. When the second groove 41 is formed, a material at the second groove 41 is extruded from an inner side of the second corner 3 to a position of the second rounded corner 5, to reduce the radius of the second rounded corner 5. Arrangement of the second groove 41 merely enables local plastic deformation to occur at the second corner 3, so that impact on structural integrity and structural strength at an edge of the housing 10 is small.

In some embodiments, as shown in FIG. 9, the second groove 41 is arranged at a junction between the bottom wall 1 and the side wall 2. In this design, the second groove 41 can be closer to the second rounded corner 5, and when the second groove 41 is formed, the material at the second groove 41 is more easily extruded to the second rounded corner 5, so that the second groove 41 is more easily formed.

Certainly, in addition to being arranged at the junction between the bottom wall 1 and the side wall 2, the second groove 41 may also be arranged on an inner side surface of the bottom wall 1 or the side wall 2. This is not specifically limited herein.

A groove depth of the second groove 41 is h2, representing an important parameter of the housing 10. h2 should not be too large or too small. If h2 is too large, strength at the second corner 3 is reduced, and the second corner 3 is prone to breakage under an action of external force; and if h2 is too small, when the second groove 41 is formed, the material at the second groove 41 extruded to the second rounded corner 5 is few, causing reduction of the second rounded corner 5 not to be large. It is found through researches that, when h2=(0.125 to 0.1875) d2, the strength at the second corner 3 can be ensured, and the reduction of the second rounded corner 5 can also be prevented from being too small. d2 is a wall thickness of the bottom wall 1.

For example, when the wall thickness d2 of the bottom wall 1 is equal to 0.8 mm, the groove depth h2 of the second groove 41 should be set to be 0.1 to 0.15 mm, so that the strength at the second corner 3 can be ensured, and the reduction of the second rounded corner 5 can also be prevented from being too small.

In some embodiments, as shown in FIG. 9, the second structural portion 4 further includes a second extrusion surface 42, and the second extrusion surface 42 is located at an end portion of the side wall 2 away from the bottom wall 1. When the second extrusion surface 42 is formed, the side wall 2 is subjected to extrusion force and undergoes plastic deformation in the direction close to the bottom wall 1, and part of a material of the side wall 2 is extruded to the second rounded corner 5, so that the radius of the second rounded corner 5 is further reduced.

For example, the wall thickness of the side wall 2 is 0.8 mm. By arranging the second groove 41, the radius of the second rounded corner 5 can be reduced to 0.8 mm or less, such as 0.45 mm; and by arranging the second extrusion surface 42, the radius of the second rounded corner 5 can be further reduced, for example, can be reduced to 0 mm (in other words, the second rounded corner 5 is eliminated, and the junction between the bottom wall 1 and the side wall 2 is at a right angle).

The second extrusion surface 42 may be formed by stamping (for example, back extrusion), but is not limited thereto, or the first extrusion surface 252 may be formed by extrusion. This is not specifically limited.

In some embodiments, as shown in FIG. 8 and FIG. 9, the wall thicknesses of the bottom wall 1, the vertical wall 22, and the inner bent wall 21 are equal. For example, the wall thicknesses of the bottom wall 1, the vertical wall 22, and the inner bent wall 21 are all 0.8 mm. In this design, the edge of the housing 10 (namely, the side wall 2) can have enough strength, and large deformation at the edge of the housing 10 under the action of external force is avoided, thereby ensuring reliability of a structure of the housing 10.

The following is a specific introduction to a manufacturing method for a housing 10 according to some embodiments of this application.

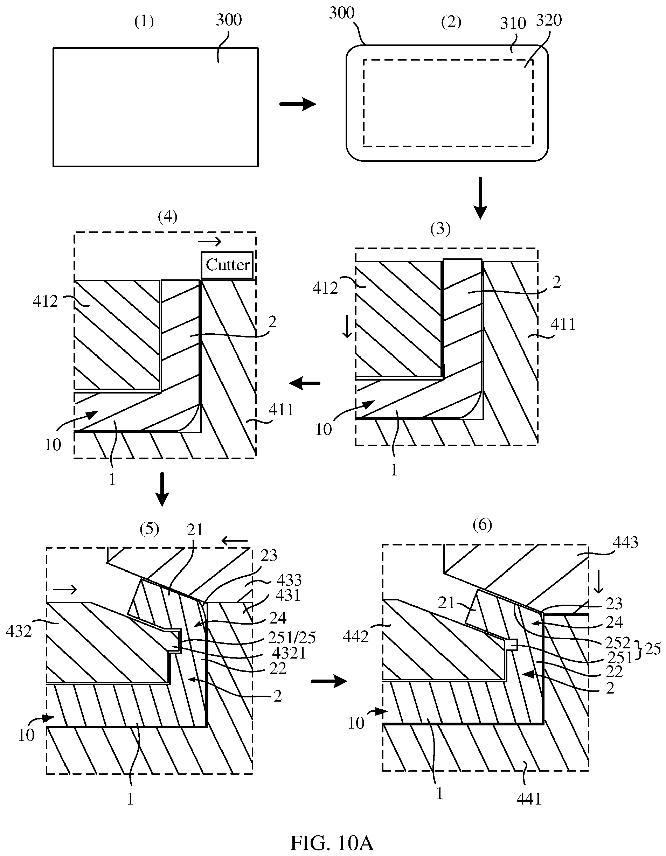

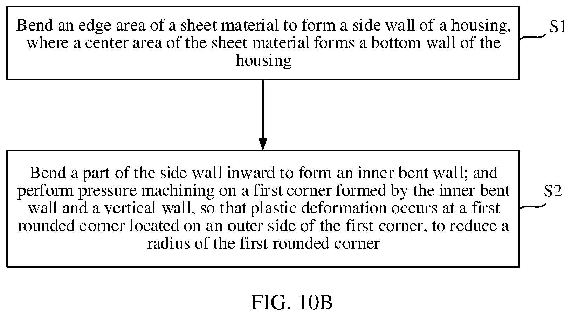

As shown in FIG. 10A and FIG. 10B, FIG. 10A is a schematic diagram of a manufacturing process of the housing 10 shown in FIG. 8, a bottom wall 1 and a side wall 2 shown in FIG. 10Aare merely schematic diagrams, and are not shown according to a real proportion of actual products, and FIG. 10B is a flowchart of the manufacturing process of the housing 10 shown in FIG. 8. The manufacturing method for a housing 10 includes the following steps:

S1: As shown in (2) and (3) in FIG. 10A, bend an edge area 310 of a sheet material 300 to form a side wall 2 of the housing 10, where a central area 320 of the sheet material 300 forms a bottom wall 1 of the housing 10.

The bending an edge area 310 of a sheet material 300 may be implemented through mold stamping: As shown in (3) in FIG. 10A, the sheet material 300 is placed at an opening of a mold cavity of a first concave mold 411, where a shape of the mold cavity of the first concave mold 411 matches a shape of a to-be-formed housing 10; a first convex mold 412 stamps the sheet material 300 into the mold cavity of the first concave mold 411; and under pressure of the first convex mold 412, the edge area 310 of the sheet material 300 is bent to form the side wall 2 of the housing 10.

In addition to bending in a stamping manner, the edge area 310 of the sheet material 300 may also be bent in a sheet metal machining manner, for example, the bending may be implemented on a plate bending machine.

Before the bending an edge area 310 of a sheet material 300, the sheet material 300 needs to be preprocessed. For example, as shown in (1) in FIG. 10A, corners of the sheet material 300 are cut to form rounded corners.

After the bending an edge area 310 of a sheet material 300 to form a side wall 2 of the housing 10, as shown in (4) in FIG. 10A, an end portion of the side wall 2 away from the bottom wall 1 also needs to be cut, so that a height of the side wall 2 is adjusted to a design requirement.

S2: As shown in (5) and (6) in FIG. 10A, bend a part of the side wall 2 away from the bottom wall 1 inward to form an inner bent wall 21; and perform pressure machining on a first corner 24 formed by the inner bent wall 21 and a vertical wall 22, so that plastic deformation occurs at a first rounded corner 23 located on an outer side of the first corner 24, to reduce a radius of the first rounded corner 23.

By performing pressure machining on the first corner 24 formed by the inner bent wall 21 and the vertical wall 22, the radius of the first rounded corner 23 can be reduced by replacing time-consuming numerical control milling machining with pressure machining. In this way, manufacturing time of the housing 10 can be shortened, to improve manufacturing efficiency of the housing 10, and a texture trace of a milling cutter is also prevented from being left on an appearance surface of the housing 10.

In some embodiments, as shown in (5) in FIG. 10A, the performing pressure machining on a first corner 24 in S2 includes: extruding an inner side of the first corner 24, to form a first groove 251 extending in a circumferential direction of the housing 10. Because arrangement of the first groove 251 merely enables local plastic deformation to occur at the first corner 24, impact on structural integrity and structural strength of the side wall 2 is small.

In some embodiments, as shown in (5) in FIG. 10A, during the bending a part of the side wall 2 away from the bottom wall 1 inward, the inner side of the first corner 24 is extruded to form the first groove 251. When the bending of the side wall 2 and formation of the first groove 251 are completed in one process, a process can be reduced, so that the manufacturing efficiency of the housing 10 is further improved.

The bending a part of the side wall 2 away from the bottom wall 1 inward and the first groove 251 may be formed in the following manner: As shown in (5) in FIG. 10A, the housing 10 is arranged in a third concave mold 431, a first inner slider 432 is arranged in the housing 10, the first inner slider 432 is provided with a first pressure rib 4321, and a push slider 433 is arranged on an edge of the third concave mold 431. By pushing the push slider 433 to an inner side of the side wall 2, the part of the side wall 2 away from the bottom wall 1 (in other words, a part of the side wall 2 extending out of the third concave mold 431) is bent inward to form the inner bent wall 21. When the side wall 2 is bent, the first inner slider 432 is pushed towards the vertical wall 22, so that the first pressure rib 4321 extrudes the inner side of the first corner 24, to form the first groove 251.

Certainly, the bending a part of the side wall 2 away from the bottom wall 1 inward and forming of the first groove 251 may be further designed as two separate processes. For example, first, the part of the side wall 2 away from the bottom wall 1 is bent inward to form the inner bent wall 21; and then the inner side of the first corner 24 is extruded, to form the first groove 251.

In some embodiments, as shown in (6) in FIG. 10A, the performing pressure machining on a first corner 24 in S2 further includes: clamping the vertical wall 22 after the first groove 251 is formed, to prevent plastic deformation of the vertical wall 22 in a thickness direction; stamping (for example, pier-extruding) or extruding the inner bent wall 21 in a direction close to the bottom wall 1, to reduce the radius of the first rounded corner 23; and forming a first extrusion surface 252 on an outer side of the inner bent wall 21. In this way, the inner bent wall 21 is subjected to extrusion force and undergoes plastic deformation in the direction close to the bottom wall 1, and part of a material on the outer side of the inner bent wall 21 is extruded to the first rounded corner 23, so that the radius of the first rounded corner 23 is further reduced. By clamping the vertical wall 22, a wrinkle on the vertical wall 22 caused by plastic deformation of the vertical wall 22 under pressure can be avoided.

The stamping or extruding the inner bent wall 21 may be implemented in the following manner: As shown in (6) in FIG. 10A, the housing 10 is arranged in a fourth concave mold 441, and the housing 10 is provided with a fourth convex mold 442. The fourth convex mold 442 and the fourth concave mold 441 clamp the vertical wall 22, and an extrusion block 443 stamps or extrudes the inner bent wall 21 in the direction close to the bottom wall 1, so that the inner bent wall 21 undergoes plastic deformation in the direction close to the bottom wall 1 until the inner bent wall 21 abuts against a surface of the fourth convex mold 442. In this case, the first extrusion surface 252 is formed through extruding the outer side of the inner bent wall 21.

It should be noted that, when the inner bent wall 21 undergoes plastic deformation under stamping or extruding, the first groove 251 plays a role in accommodating part of the material of the inner bent wall 21. In other words, when the inner bent wall 21 undergoes plastic deformation under pressure, the part of the material of the inner bent wall 21 flows to the first groove 251, to fill a part of space of the first groove 251, so that a width of the first groove 251 is reduced.

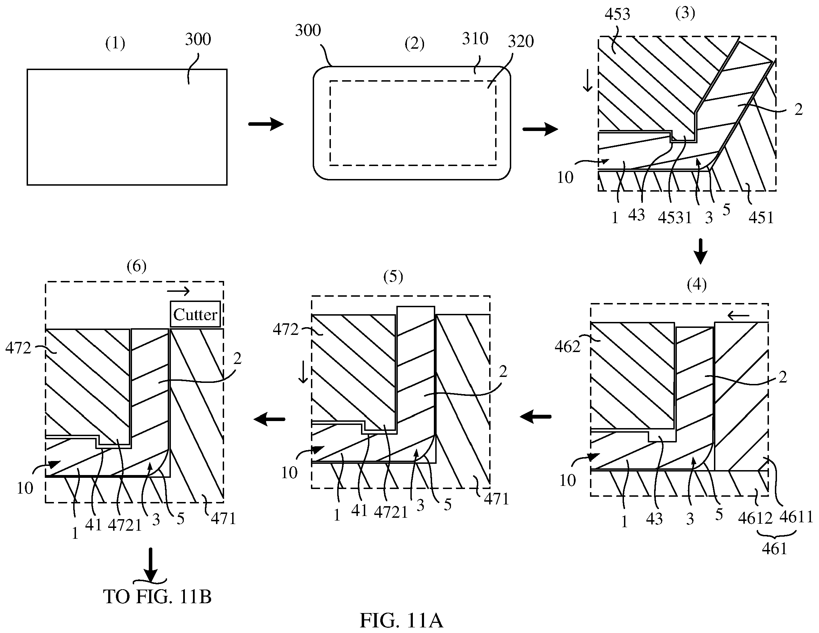

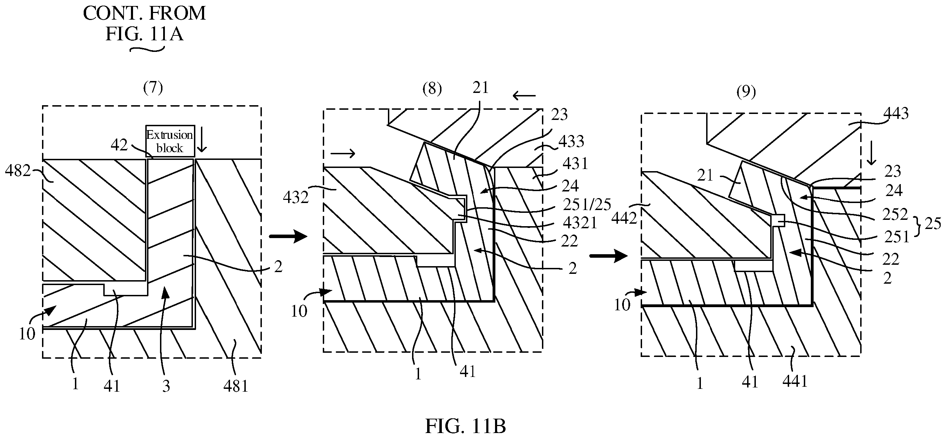

In some embodiments, as shown in FIG. 11A and FIG. 11B, FIG. 11A and FIG. 11B are a schematic diagram of a manufacturing process of the housing 10 shown in FIG. 9.

As shown in (3) to (5) in FIG. 11A, after the bending an edge area 310 of a sheet material 300 to form a side wall 2 of the housing 10, the method further includes: performing pressure machining on a second corner 3 formed by the side wall 2 and the bottom wall 1, so that plastic deformation occurs at a second rounded corner 5 located on an outer side of the second corner 3, to reduce a radius of the second rounded corner 5. In this way, the radius of the second rounded corner 5 is reduced without setting time-consuming numerical control milling machining. In this way, manufacturing time of the housing 10 can be shortened, to improve manufacturing efficiency of the housing 10, and the texture trace of the milling cutter is also prevented from being left on an appearance surface of the housing 10.

In some embodiments, the performing pressure machining on a second corner 3 includes: as shown in (3) to (5) in FIG. 11A, extruding an inner side of the second corner 3, to form a second groove 41 extending in the circumferential direction of the housing 10. Because arrangement of the second groove 41 merely enables local plastic deformation to occur at the second corner 3, impact on structural integrity and structural strength at the edge of the housing 10 is small.

In some embodiments, the bending an edge area 310 of a sheet material 300 to form a side wall 2 of the housing 10, and the extruding an inner side of the second corner 3, to form a second groove 41 extending in the circumferential direction of the housing 10 includes the following steps:

S11: As shown in (2) and (3) in FIG. 11A, bend the edge area 310 of the sheet material 300 inward at a preset angle to form the side wall 2, and extrude the inner side of the second corner 3 to form a transition groove 43. The preset angle is less than 90°.

The bending of the edge area 310 of the sheet material 300 and forming of the transition groove 43 may be implemented through mold stamping: As shown in (3) in FIG. 11A, the sheet material 300 is placed at an opening of a mold cavity of a fifth concave mold 451, where a shape of the mold cavity of the fifth concave mold 451 matches the shape of the to-be-formed housing 10 a fifth convex mold 453 stamps the sheet material 300 into the mold cavity of the fifth concave mold 451, where a second pressure rib 4531 is arranged on the fifth convex mold 453; and under pressure of the fifth convex mold 453, the edge area 310 of the sheet material 300 is bent to abut against the fifth convex mold 453, to bend at the preset angle. In addition, the second pressure rib 4531 extrudes the inner side of the second corner 3, to form the transition groove 43.

In addition to bending in a stamping manner, the edge area 310 of the sheet material 300 may also be bent at the preset angle in a sheet metal machining manner, for example, the bending may be implemented on a plate bending machine.

Before the bending an edge area 310 of a sheet material 300, the sheet material 300 needs to be preprocessed. For example, as shown in (1) in FIG. 11A, corners of the sheet material 300 are cut to form the rounded corners.

S12: As shown in (4) in FIG. 11A, continuously bend the side wall 2 inward to a preset position after the transition groove 43 is formed. The preset position may be a position at which the side wall 2 is perpendicular to or approximately perpendicular to the bottom wall 1 (a deviation is within 5°), or may be another position. This is not specifically limited herein.

The continuously bending the side wall 2 inward to a second preset angle may be implemented in the following manner: As shown in (4) in FIG. 11A, the housing 10 with the side wall 2 being bent at the preset angle is arranged in a sixth concave mold 461, a concave mold side wall 4611 of the sixth concave mold 461 may slide relative to a concave mold bottom wall 4612, and a sixth convex mold 462 is arranged in the housing 10. Then, the concave mold side wall 4611 is slid towards the inner side of the side wall 2, to push to bend the side wall 2 until the side wall 2 abuts against the sixth convex mold 462, so that the side wall 2 is bent to the preset position.

Certainly, the bending the side wall 2 to the preset position is not limited to the foregoing manner, and the bending the side wall 2 to the preset position may also be implemented in the sheet metal machining manner, for example, the bending may be implemented on the plate bending machine.

S13: As shown in (5) in FIG. 11A, extrude the transition groove 43, to form a second groove 41.

When the second groove 41 is formed, a material at the transition groove 43 is extruded to the second rounded corner 5 from the inner side of the second corner 3, so that the radius of the second rounded corner 5 can be further reduced.

The second groove 41 may be implemented in the following manner: As shown in (5) in FIG. 11A, the housing 10 is arranged in a seventh concave mold 471, a third inner slider 472 is arranged in the housing 10, and a third pressure rib 4721 is arranged on the third inner slider 472. Next, the third inner slider 472 is pushed in the direction close to the bottom wall 1, so that the third pressure rib 4721 extrudes the transition groove 43, to form the second groove 41.

Compared with bending the side wall 2 once to reach the preset position, and arranging the second groove 41 at the second corner 3, in the embodiment shown in FIG. 11A and FIG. 11B, the side wall 2 is bent twice to reach the preset position, and the second groove 41 is formed by extrusion twice. In this design, a wrinkle on an outer side surface of the second corner 3 can be avoided being formed due to overlarge plastic deformation at the second corner 3, thereby ensuring flatness of appearance at the second corner 3.

After the second groove 41 is formed, as shown in (6) in FIG. 11A, an end portion of the side wall 2 away from the bottom wall 1 also needs to be cut, so that a height of the side wall 2 is adjusted to a design requirement.

In S11, the preset angle (namely, a first bending angle of the side wall 2) should not be too large or too small. If the preset angle is too large, plastic deformation at the second corner 3 is still large, not conducive to keeping flatness of the outer side surface of the second corner 3. If the preset angle is too small, a second bending angle of the side wall 2 is too large, and plastic deformation at the second corner 3 is also large, not conducive to keeping the flatness of the outer side surface of the second corner 3 as well. It is found through researches that, when the preset angle ranges from 45° to 70°, plastic deformation at the second corner 3 can be small when the side wall 2 is bent each time, thereby ensuring the flatness of the outer side surface of the second corner 3.

It is further found through researches that, when the preset angle is 70°, the flatness of the outer side surface of the second corner 3 can be better ensured.

In some embodiments, as shown in (7) in FIG. 11B, after the performing pressure machining on a second corner 3, the method further includes: clamping the side wall 2 after the second groove 41 is formed, to prevent plastic deformation of the side wall 2 in the thickness direction; stamping (for example, extruding back) or extruding the end portion of the side wall away 2 from the bottom wall 1 in the direction close to the bottom wall 1, to reduce the radius of the second rounded corner 5; and forming a second extrusion surface 42 at the end portion of the side wall 2 away from the bottom wall 1. In this way, the side wall 2 is subjected to extrusion force and undergoes plastic deformation in the direction close to the bottom wall 1, and part of a material of the side wall 2 is extruded to the second rounded corner 5, so that the radius of the second rounded corner 5 is further reduced. By clamping the side wall 2, a wrinkle on the side wall 2 caused by plastic deformation of the side wall 2 under pressure can be avoided.

The stamping or extruding the side wall 2 may be implemented in the following manner: As shown in (7) in FIG. 11B, the housing 10 is arranged in an eighth concave mold 481, and an eighth convex mold 482 is arranged in the housing 10. The eighth convex mold 482 and the eighth concave mold 481 clamp the side wall 2, and an extrusion block stamps or extrudes the end portion of the side wall 2 away from the bottom wall 1 in the direction close to the bottom wall 1, so that plastic deformation occurs at the side wall 2 in the direction close to the bottom wall 1, to reduce the radius of the second rounded corner 5.

Processes of forming the inner bent wall 21 and a first structural portion 25 are shown in (8) and (9) in FIG. 11B, and are specifically the same as processes in (5) and (6) in FIG. 10A. Details are not described herein again.

In some embodiments, as shown in FIG. 2 and FIG. 4, after S2 is completed, part of the side wall 2 is removed in the circumferential direction of the housing 10, to form an avoidance notch 8 for mounting a display screen 200.

The avoidance notch 8 may be formed in a milling manner, or may be formed in a cutting manner. This is not specifically limited herein.

In some embodiments, after S2 is completed, the manufacturing method for a housing 10 further includes: performing grinding, sand blasting, anodic dyeing, and laser etching processing on the housing 10.

Grinding is to remove uneven structures such as burrs on the housing 10. In addition, the first rounded corner 23 and the second rounded corner 5 may also be ground, so that the radiuses of the first rounded corner 23 and the second rounded corner 5 are smaller.

Sand blasting is to clean and roughen a surface of the housing 10 through impacting of a high-speed sand flow, so that the surface of the housing 10 obtains cleanliness and different roughness, and a mechanical property of the surface of the housing 10 is improved, thereby enhancing fatigue resistance of the housing 10, increasing adhesion between the housing and a coating, and prolonging durability of the coating.

Anodic dyeing (also referred to as electrochemical coloring) is to color a surface color of the housing 10, to be specific, perform anodic oxidation or coating on the surface of the housing 10, and then color, under an action of an electric field during electrolysis, an oxide film or the coating of the surface of the housing 10.

Laser etching is based on a numerical control technology, with a laser as a processing medium, to inscribe a character or pattern on the housing 10. The pattern or character inscribed through this technology does not have a score, the surface of the housing 10 is still smooth, and the inscribed character or pattern is not abraded.

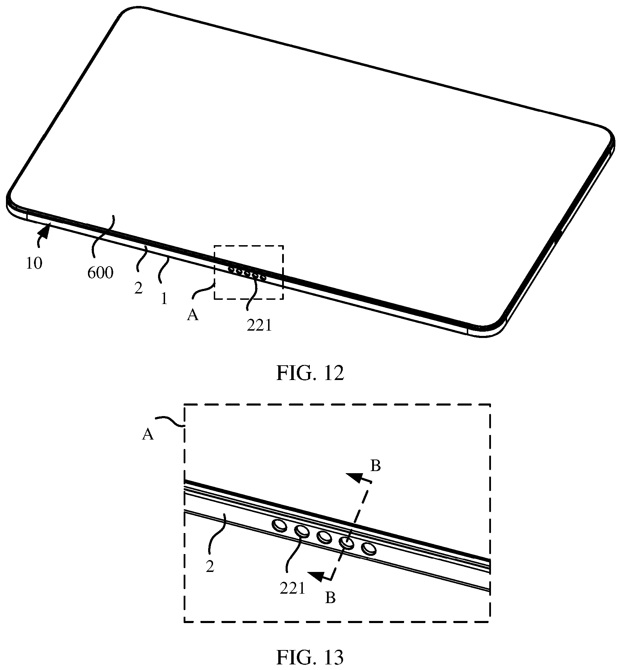

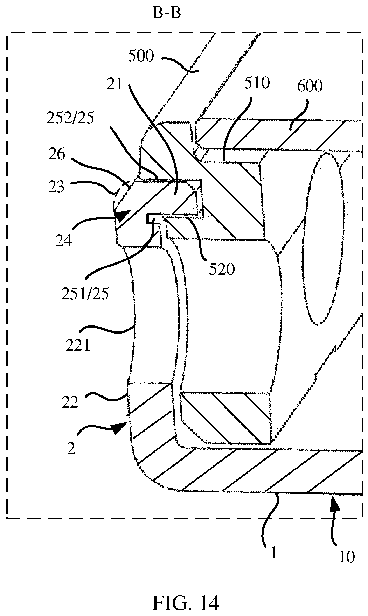

As shown in FIG. 12, FIG. 13, and FIG. 14, FIG. 12 is a schematic diagram of a structure of a tablet computer according to some embodiments of this application, FIG. 13 is a partial enlarged view of part A in FIG. 12, and FIG. 14 is a sectional view in FIG. 13 along B-B. In the embodiments, a terminal device is a tablet computer, and the tablet computer includes a housing 10, a rubber frame 500, and a display panel 600. The rubber frame 500 is arranged in the housing 10 and a part of the rubber frame 500 extends out of the housing 10, a positioning step 510 is arranged on the rubber frame 500, and an edge of the display panel 600 is arranged on the positioning step 510.

The display panel 600 may be fixed on the positioning step 510 by bonding, but is not limited thereto, or may be fixed on the positioning step 510 by snapping.

The housing 10 includes a bottom wall 1 and a side wall 2 bent and connected to an edge of the bottom wall 1, where a part of the side wall 2 away from the bottom wall 1 is bent inward to form an inner bent wall 21.

For arrangements of a first structural portion 25 and a second structural portion 4, they may be specifically referred to description in the embodiment of the notebook computer. Details are not described herein again. For example, as shown in FIG. 14, the housing 10 is provided with the first structural portion 25, where the first structural portion 25 includes a first groove 251 and a first extrusion surface 252, the first groove 251 is arranged on an inner side of a first corner 24 and extends in a circumferential direction of the housing 10, and the first extrusion surface 252 is located on an outer side of the inner bent wall 21 and is connected to a first rounded corner 23.

In some embodiments, as shown in FIG. 14, an outer side of the first corner 24 formed by the inner bent wall 21 and a vertical wall 22 is provided with a chamfer 26, to cut off the first rounded corner 23. A contour before the first rounded corner 23 is cut off is shown in dotted lines in the figure. By arranging the chamfer 26, the housing 10 can be well connected to the rubber frame 500, to prevent a step formed at a junction between the rubber frame 500 and the inner bent wall 21 from affecting appearance of the tablet computer.

As shown in FIG. 14, the vertical wall 22 is provided with an opening 221. The opening 221 may penetrate through the vertical wall 22, or may not penetrate through the vertical wall 22. This is not specifically limited herein. The opening 221 may be a sound outlet hole (as shown in FIG. 11A and FIG. 11B), or may be a socket (such as a charging interface) for plugging a plug of an external device. This is not specifically limited herein. Because the opening 221 is arranged on the vertical wall 22, a structure of the housing 10 at the opening 221 is weak, strength and rigidity are low, and bending resistance is poor.

Therefore, in some embodiments, as shown in FIG. 14, the inner bent wall 21 is arranged at the opening 221 in the circumferential direction of the housing 10. In this design, strength of the housing 10 at the opening 221 is improved, thereby greatly improving rigidity and bending resistance of the housing 10. In a scenario in which the housing 10 is made of a 5052-H32 aluminum alloy material, thicknesses of the bottom wall 1 and the vertical wall 22 are 0.8 mm, and a thickness of the inner bent wall 21 is 0.65 mm, a rigidity gain of the housing 10 is increased by 15% or more when the inner bent wall 21 is arranged at the opening 221.

In the circumferential direction of the housing 10, the inner bent wall 21 may be arranged in a partial area of the vertical wall 22, or may be arranged in all areas of the vertical wall 22. This is not specifically limited herein. When the inner bent wall 21 is arranged in the partial area of the vertical wall 22, the inner bent wall 21 in other areas of the vertical wall 22 may be milled by milling or the like.

In some embodiments, as shown in FIG. 14, the rubber frame 500 is provided with an avoidance groove 520 for the inner bent wall 21 to extend into. In this design, a groove wall of the avoidance groove 520 has a limiting effect on deformation of the inner bent wall 21, thereby further improving the rigidity and bending resistance of the housing 10.

A manufacturing method for a housing 10 in the tablet computer may be arranged by specifically referring to a manufacturing method for a housing 10 in the embodiment of the notebook computer. Details are not described herein again.

In description of this specification, a specific feature, structure, material, or characteristic may be combined in any one or more of embodiments or examples in a suitable manner.

## Claims

1. A housing (10) of a terminal device, comprising a bottom wall (1) and a side wall (2) bent and connected to an edge of the bottom wall (1), wherein a part of the side wall (2) away from the bottom wall (1) is bent inward to form an inner bent wall (21), and a part of the side wall (2) located between the inner bent wall (21) and the bottom wall (1) is a vertical wall (22); and
a first corner (24) formed by the inner bent wall (21) and the vertical wall (22) is provided with a first structural portion (25) formed by pressure machining, so that plastic deformation occurs at a first rounded corner (23) located on an outer side of the first corner (24), to reduce a radius of the first rounded corner (23),
**characterised in that**
the first structural portion (25) comprises a first groove (251), the first groove (251) is arranged on an inner side of the first corner (24) and extends in a circumferential direction of the housing (10).

2. The housing (10) of a terminal device according to claim 1, wherein
the first groove (251) is arranged at a junction between the vertical wall (22) and the inner bent wall (21).

3. The housing (10) of a terminal device according to claim 2, wherein
a wall thickness of the vertical wall (22) is d1, and a groove depth of the first groove (251) is h1, wherein h1=(0.125 to 0.1875) d1.

4. The housing (10) of a terminal device according to any one of claims 1 to 3, wherein
a second corner (3) formed by the side wall (2) and the bottom wall (1) is provided with a second structural portion (4) formed by pressure machining, so that plastic deformation occurs at a second rounded corner (5) located on an outer side of the second corner (3), to reduce a radius of the second rounded corner (5).

5. The housing (10) of a terminal device according to claim 4, wherein
the second structural portion (4) comprises a second groove (41) and/or a second extrusion surface (42), the second groove (41) is arranged on an inner side of the second corner (3) and extends in the circumferential direction of the housing (10), and the second extrusion surface (42) is located at an end portion of the side wall (2) away from the bottom wall (1).

6. The housing (10) of a terminal device according to any one of claims 1 to 5, wherein wall thicknesses of the bottom wall (1), the vertical wall (22), and the inner bent wall (21) are equal.

7. The housing (10) of a terminal device according to any one of claims 1 to 6, wherein
the vertical wall (22) is provided with an opening (221), and the inner bent wall (21) is arranged at the opening (221) in the circumferential direction of the housing (10).

8. A manufacturing method for a housing (10) of a terminal device, comprising:
bending an edge area (310) of a sheet material (300) to form a side wall (2) of the housing (10), wherein a center area (320) of the sheet material (300) forms a bottom wall (1) of the housing (10);
bending a part of the side wall (2) away from the bottom wall (1) inward to form an inner bent wall (21), wherein a part of the side wall (2) located between the inner bent wall (21) and the bottom wall (1) is a vertical wall (22); and
performing pressure machining on a first corner (24) formed by the inner bent wall (21) and the vertical wall (22), so that plastic deformation occurs at a first rounded corner (23) located on an outer side of the first corner (24), to reduce a radius of the first rounded corner (23),
**characterised in that**
the performing pressure machining on a first corner (24) comprises:
extruding an inner side of the first corner (24), to form a first groove (251) extending in a circumferential direction of the housing (10).

9. The manufacturing method for a housing (10) of a terminal device according to claim 8, comprising:
extruding, during the bending a part of the side wall (2) away from the bottom wall (1) inward, the inner side of the first corner (24) to form the first groove (251).

10. The manufacturing method for a housing (10) of a terminal device according to claim 8, wherein
the performing pressure machining on a first corner (24) further comprises:
clamping the vertical wall (22) after the first groove (251) is formed, to prevent plastic deformation of the vertical wall (22) in a thickness direction; stamping or extruding the inner bent wall (21) in a direction close to the bottom wall (1), to reduce the radius of the first rounded corner (23); and forming a first extrusion surface on an outer side of the inner bent wall (21).

11. The manufacturing method for a housing (10) of a terminal device according to any one of claims 8 to 10, wherein
after the bending an edge area (310) of a sheet material (300) to form a side wall (2) of the housing (10), the method further comprises:
performing pressure machining on a second corner (3) formed by the side wall (2) and the bottom wall (1), so that plastic deformation occurs at a second rounded corner (5) located on an outer side of the second corner (3), to reduce a radius of the second rounded corner (5).

12. The manufacturing method for a housing (10) of a terminal device according to claim 11, wherein
the performing pressure machining on a second corner (3) comprises:
extruding an inner side of the second corner (3), to form a second groove (41) extending in the circumferential direction of the housing (10);
clamping the side wall (2) after the second groove (41) is formed, to prevent plastic deformation of the side wall (2) in the thickness direction; stamping or extruding an end portion of the side wall (2) away from the bottom wall (1) in the direction close to the bottom wall (1), to reduce the radius of the second rounded corner (5); and forming a second extrusion surface (42) at the end portion of the side wall (2) away from the bottom wall (1).

13. The manufacturing method for a housing (10) of a terminal device according to claim 12, wherein
the bending an edge area (310) of a sheet material (300) to form a side wall (2) of the housing (10), and the extruding an inner side of the second corner (3), to form a second groove (41) extending in the circumferential direction of the housing (10) comprise:
bending the edge area (310) of the sheet material (300) inward at a preset angle to form the side wall (2), and extruding the inner side of the second corner (3) to form a transition groove (43), wherein the preset angle is less than 90°; and
continuously bending the side wall (2) inward to a preset position, and extruding a position of the transition groove (43), to form the second groove (41).

## Patentansprüche

1. Gehäuse (10) eines Endgerätes, umfassend eine Bodenwand (1) und eine Seitenwand (2), die an einer Kante der Bodenwand (1) gebogen und verbunden ist, wobei ein Teil der Seitenwand (2), der von der Bodenwand (1) entfernt ist, nach innen gebogen ist, um eine innere Biegewand (21) zu bilden, und ein zwischen der inneren Biegewand (21) und der Bodenwand (1) befindlicher Teil der Seitenwand (2) eine senkrechte Wand (22) ist; und
eine erste Ecke (24), gebildet aus der inneren Biegewand (21) und der senkrechten Wand (22), ist mit einem ersten Strukturabschnitt (25) versehen, der durch Druckbearbeitung hergestellt wird, wodurch eine plastische Verformung an einem äußeren ersten Rundbogen (23) der ersten Ecke (24) erfolgt, um den Radius des ersten Rundbogens (23) zu verringern,
**dadurch gekennzeichnet, dass** der erste Strukturabschnitt (25) eine erste Nut (251) umfasst, wobei die erste Nut (251) auf einer Innenseite der ersten Ecke (24) angeordnet ist und sich in Umfangsrichtung des Gehäuses (10) erstreckt.

2. Gehäuse (10) eines Endgerätes gemäß Anspruch 1, wobei
die erste Nut (251) an der Verbindung zwischen der senkrechten Wand (22) und der inneren Biegewand (21) angeordnet ist.

3. Gehäuse (10) eines Endgerätes gemäß Anspruch 2, wobei
eine Wandstärke der senkrechten Wand (22) d1 beträgt und eine Nutztiefe der ersten Nut (251) h1 beträgt, wobei h1 = (0,125 bis 0,1875) d1.

4. Gehäuse (10) eines Endgerätes gemäß einem der Ansprüche 1 bis 3, wobei
eine zweite Ecke (3), gebildet aus der Seitenwand (2) und der Bodenwand (1), mit einem zweiten Strukturabschnitt (4) versehen ist, der durch Druckbearbeitung hergestellt wird, wodurch eine plastische Verformung an einem äußeren zweiten Rundbogen (5) der zweiten Ecke (3) erfolgt, um den Radius des zweiten Rundbogens (5) zu verringern.

5. Gehäuse (10) eines Endgerätes gemäß Anspruch 4, wobei
der zweite Strukturabschnitt (4) eine zweite Nut (41) und/oder eine zweite Extrusionsfläche (42) umfasst, wobei die zweite Nut (41) an der Innenseite der zweiten Ecke (3) angeordnet ist und sich in der Umfangsrichtung des Gehäuses (10) erstreckt und die zweite Extrusionsfläche (42) sich an einem Endabschnitt der Seitenwand (2), der von der Bodenwand (1) entfernt ist, befindet.

6. Gehäuse (10) eines Endgerätes gemäß einem der Ansprüche 1 bis 5, wobei Wandstärken der Bodenwand (1), der senkrechten Wand (22) und der inneren Biegewand (21) gleich sind.

7. Gehäuse (10) eines Endgerätes gemäß einem der Ansprüche 1 bis 6, wobei
Die senkrechte Wand (22) ist mit einer Öffnung (221) versehen, und die innen gebogene Wand (21) ist an der Öffnung (221) in Umfangsrichtung des Gehäuses (10) angeordnet.

8. Ein Herstellungsverfahren für ein Gehäuse (10) eines Endgeräts, umfassend:
Biegen eines Randbereichs (310) eines Blechmaterials (300), um eine Seitenwand (2) des Gehäuses (10) zu formen, wobei ein Mittelbereich (320) des Blechmaterials (300) die Bodenwand (1) des Gehäuses (10) bildet;
Ein Biegen eines Teils der Seitenwand (2) von der Bodenwand (1) weg nach innen, um eine innen gebogene Wand (21) zu bilden, wobei ein Teil der Seitenwand (2), der sich zwischen der innen gebogenen Wand (21) und der Bodenwand (1) befindet, die senkrechte Wand (22) ist; und
Druckbearbeitung an einer ersten Ecke (24), die durch die innen gebogene Wand (21) und die senkrechte Wand (22) gebildet wird, so dass eine plastische Verformung an einer ersten Rundung (23), die sich auf der Außenseite der ersten Ecke (24) befindet, erfolgt, um den Radius der ersten Rundung (23) zu verringern,
**dadurch gekennzeichnet, dass** die Druckbearbeitung an einer ersten Ecke (24) umfasst:
das Extrudieren der Innenseite der ersten Ecke (24), um eine erste Nut (251) zu bilden, die sich in Umfangsrichtung des Gehäuses (10) erstreckt.

9. Das Herstellungsverfahren für ein Gehäuse (10) eines Endgeräts gemäß Anspruch 8, umfassend:
das Extrudieren, während des Biegens eines Teils der Seitenwand (2) von der Bodenwand (1) weg nach innen, der Innenseite der ersten Ecke (24), um die erste Nut (251) zu formen.

10. Das Herstellungsverfahren für ein Gehäuse (10) eines Endgeräts gemäß Anspruch 8, wobei
die Druckbearbeitung an einer ersten Ecke (24) weiter umfasst:
das Klemmen der senkrechten Wand (22) nach der Bildung der ersten Nut (251), um eine plastische Verformung der senkrechten Wand (22) in Dickenrichtung zu verhindern; das Stanzen oder Extrudieren der innen gebogenen Wand (21) in Richtung zur Bodenwand (1), um den Radius der ersten Rundung (23) zu verringern; und das Bilden einer ersten Extrusionsfläche auf der Außenseite der innen gebogenen Wand (21).

11. Das Herstellungsverfahren für ein Gehäuse (10) eines Endgeräts gemäß einem der Ansprüche 8 bis 10, wobei
nach dem Biegen eines Randbereichs (310) eines Blechmaterials (300), um eine Seitenwand (2) des Gehäuses (10) zu bilden, das Verfahren weiter umfasst:
Druckbearbeitung an einer zweiten Ecke (3), die durch die Seitenwand (2) und die Bodenwand (1) gebildet wird, so dass eine plastische Verformung an einer zweiten Rundung (5), die sich auf der Außenseite der zweiten Ecke (3) befindet, erfolgt, um den Radius der zweiten Rundung (5) zu verringern.

12. Herstellungsverfahren für ein Gehäuse (10) eines Endgeräts gemäß Anspruch 11, wobei
das Ausführen der Druckbearbeitung an einer zweiten Ecke (3) Folgendes umfasst:
das Extrudieren der Innenseite der zweiten Ecke (3), um eine zweite Nut (41) zu bilden, die sich in Umfangsrichtung des Gehäuses (10) erstreckt;
das Fixieren der Seitenwand (2) nach der Bildung der zweiten Nut (41), um eine plastische Verformung der Seitenwand (2) in Dickenrichtung zu verhindern; das Stanzen oder Extrudieren eines Endabschnitts der Seitenwand (2) von der Bodenwand (1) weg in Richtung zur Bodenwand (1), um den Radius der zweiten abgerundeten Ecke (5) zu verringern; und das Ausbilden einer zweiten Extrusionsfläche (42) am Endabschnitt der Seitenwand (2) von der Bodenwand (1) entfernt.

13. Herstellungsverfahren für ein Gehäuse (10) eines Endgeräts gemäß Anspruch 12, wobei
das Biegen eines Randbereichs (310) eines Blechmaterials (300) zur Bildung einer Seitenwand (2) des Gehäuses (10) und das Extrudieren der Innenseite der zweiten Ecke (3) zur Bildung einer zweiten Nut (41), die sich in Umfangsrichtung des Gehäuses (10) erstreckt, umfassen:
das Biegen des Randbereichs (310) des Blechmaterials (300) nach innen in einem voreingestellten Winkel, um die Seitenwand (2) zu formen, und das Extrudieren der Innenseite der zweiten Ecke (3) zur Bildung einer Übergangsnut (43), wobei der voreingestellte Winkel kleiner als 90° ist; und
das fortlaufende Biegen der Seitenwand (2) nach innen bis zu einer voreingestellten Position und das Extrudieren der Position der Übergangsnut (43), um die zweite Nut (41) zu formen.

## Revendications

1. Un boîtier (10) d'un dispositif terminal, comprenant une paroi inférieure (1) et une paroi latérale (2) pliée et connectée à un bord de la paroi inférieure (1), dans lequel une partie de la paroi latérale (2) éloignée de la paroi inférieure (1) est repliée vers l'intérieur pour former une paroi intérieure pliée (21), et une partie de la paroi latérale (2) située entre la paroi intérieure pliée (21) et la paroi inférieure (1) constitue une paroi verticale (22) ; et
un premier angle (24) formé par la paroi intérieure pliée (21) et la paroi verticale (22) est pourvu d'une première partie structurelle (25) obtenue par formage sous pression, de sorte qu'une déformation plastique se produit au niveau d'un premier angle arrondi (23) situé à l'extérieur du premier angle (24), afin de réduire le rayon du premier angle arrondi (23),
**caractérisé en ce que** la première partie structurelle (25) comprend une première rainure (251), la première rainure (251) étant disposée du côté interne du premier angle (24) et s'étendant dans la direction circonférentielle du boîtier (10).

2. Le boîtier (10) d'un dispositif terminal selon la revendication 1, dans lequel
la première rainure (251) est agencée à la jonction entre la paroi verticale (22) et la paroi intérieure pliée (21).

3. Le boîtier (10) d'un dispositif terminal selon la revendication 2, dans lequel
l'épaisseur de la paroi verticale (22) est d1, et la profondeur de rainure de la première rainure (251) est h1, où h1 = (0,125 à 0,1875) d1.

4. Le boîtier (10) d'un dispositif terminal selon l'une quelconque des revendications 1 à 3, dans lequel
un second angle (3) formé par la paroi latérale (2) et la paroi inférieure (1) est pourvu d'une seconde partie structurelle (4) obtenue par formage sous pression, de sorte qu'une déformation plastique se produit au niveau d'un second angle arrondi (5) situé à l'extérieur du second angle (3), afin de réduire le rayon du second angle arrondi (5).

5. Le boîtier (10) d'un dispositif terminal selon la revendication 4, dans lequel
la seconde partie structurelle (4) comprend une seconde rainure (41) et/ou une seconde surface d'extrusion (42), la seconde rainure (41) étant disposée du côté interne du second angle (3) et s'étendant dans la direction circonférentielle du boîtier (10), et la seconde surface d'extrusion (42) étant située à une extrémité de la paroi latérale (2) opposée à la paroi inférieure (1).

6. Le boîtier (10) d'un dispositif terminal selon l'une quelconque des revendications 1 à 5, dans lequel les épaisseurs des parois inférieure (1), verticale (22) et intérieure pliée (21) sont égales.

7. Le boîtier (10) d'un dispositif terminal selon l'une quelconque des revendications 1 à 6, dans lequel
la paroi verticale (22) est pourvue d'une ouverture (221), et la paroi pliée intérieure (21) est disposée au niveau de l'ouverture (221) dans la direction circonférentielle du boîtier (10).

8. Un procédé de fabrication d'un boîtier (10) pour un dispositif terminal, comprenant :
plier une zone de bord (310) d'un matériau en feuille (300) pour former une paroi latérale (2) du boîtier (10), une zone centrale (320) du matériau en feuille (300) formant une paroi de fond (1) du boîtier (10) ;
plier une partie de la paroi latérale (2) à l'écart de la paroi de fond (1) vers l'intérieur pour former une paroi pliée intérieure (21), une partie de la paroi latérale (2) située entre la paroi pliée intérieure (21) et la paroi de fond (1) constituant une paroi verticale (22) ; et
soumettre à un travail de pression un premier angle (24) formé par la paroi pliée intérieure (21) et la paroi verticale (22), de sorte qu'une déformation plastique se produise au niveau d'un premier coin arrondi (23) situé sur le côté extérieur du premier angle (24), afin de réduire le rayon du premier coin arrondi (23),
**caractérisé en ce que** la réalisation du travail de pression sur un premier angle (24) comprend :
extruder le côté intérieur du premier angle (24), afin de former une première rainure (251) s'étendant dans la direction circonférentielle du boîtier (10).

9. Le procédé de fabrication d'un boîtier (10) pour un dispositif terminal selon la revendication 8, comprenant :
l'extrusion, lors du pliage d'une partie de la paroi latérale (2) à l'écart de la paroi de fond (1) vers l'intérieur, du côté intérieur du premier angle (24) afin de former la première rainure (251).

10. Le procédé de fabrication d'un boîtier (10) pour un dispositif terminal selon la revendication 8, dans lequel
la réalisation du travail de pression sur un premier angle (24) comprend en outre :
serrer la paroi verticale (22) après la formation de la première rainure (251), afin d'éviter la déformation plastique de la paroi verticale (22) dans la direction de l'épaisseur ; emboutir ou extruder la paroi pliée intérieure (21) dans une direction proche de la paroi de fond (1), afin de réduire le rayon du premier coin arrondi (23) ; et former une première surface d'extrusion sur le côté extérieur de la paroi pliée intérieure (21).

11. Le procédé de fabrication d'un boîtier (10) pour un dispositif terminal selon l'une quelconque des revendications 8 à 10, dans lequel
après pliage d'une zone de bord (310) d'un matériau en feuille (300) pour former une paroi latérale (2) du boîtier (10), le procédé comprend en outre :
réaliser un travail de pression sur un deuxième angle (3) formé par la paroi latérale (2) et la paroi de fond (1), de sorte qu'une déformation plastique se produise au niveau d'un deuxième coin arrondi (5) situé sur le côté extérieur du deuxième angle (3), afin de réduire le rayon du deuxième coin arrondi (5).

12. Procédé de fabrication d'un boîtier (10) d'un dispositif terminal selon la revendication 11, dans lequel
le formage sous pression d'un deuxième coin (3) comprend :
l'extrusion du côté intérieur du deuxième coin (3), afin de former une deuxième rainure (41) s'étendant dans la direction circonférentielle du boîtier (10) ;
le serrage de la paroi latérale (2) après la formation de la deuxième rainure (41), afin d'éviter la déformation plastique de la paroi latérale (2) dans le sens de l'épaisseur ; l'estampage ou l'extrusion d'une extrémité de la paroi latérale (2) éloignée de la paroi inférieure (1) dans la direction proche de la paroi inférieure (1), afin de réduire le rayon du deuxième coin arrondi (5) ; et la formation d'une deuxième surface d'extrusion (42) à l'extrémité de la paroi latérale (2) éloignée de la paroi inférieure (1).

13. Procédé de fabrication d'un boîtier (10) d'un dispositif terminal selon la revendication 12, dans lequel
le pliage d'une zone de bord (310) d'un matériau en feuille (300) pour former une paroi latérale (2) du boîtier (10), et l'extrusion du côté intérieur du deuxième coin (3) pour former une deuxième rainure (41) s'étendant dans la direction circonférentielle du boîtier (10), comprennent :
le pliage de la zone de bord (310) du matériau en feuille (300) vers l'intérieur à un angle prédéfini pour former la paroi latérale (2), et l'extrusion du côté intérieur du deuxième coin (3) pour former une rainure de transition (43), l'angle prédéfini étant inférieur à 90° ; et
le pliage continu de la paroi latérale (2) vers l'intérieur jusqu'à une position prédéfinie, et l'extrusion à l'emplacement de la rainure de transition (43), pour former la deuxième rainure (41).
